# EUROPÄISCHE PATENTSCHRIFT

(11) **EP 2 030 707 B1**
(45) Veröffentlichungstag und Bekanntmachung des Hinweises auf die Patenterteilung: **19.10.2011**
(21) Anmeldenummer: 08162781.2
(22) Anmeldetag: 21.08.2008
(51) Int. Cl.: B23B 3/06, B23B 31/14, B23Q 1/76, B23B 7/02

(54) **Langdrehmaschine**
Long turning machine
Machine à rotation longitudinale

(30) Priorität: 28.08.2007 DE 102007042189
(43) Veröffentlichungstag der Anmeldung: 04.03.2009
(73) Patentinhaber: Index-Werke GmbH & Co. KG Hahn & Tessky, 73730 Esslingen (DE)
(72) Erfinder: Forst, Heinz, 73773, Aichwald (DE)
(74) Vertreter: Hoeger, Stellrecht & Partner Patentanwälte

(56) Entgegenhaltungen:
- WO-A-99/26748
- US-A- 2 917 313

## Beschreibung

Die Erfindung betrifft eine Langdrehmaschine umfassend ein Spindelgehäuse mit einer in diesem um eine Spindelachse drehbaren Arbeitsspindel zur Aufnahme einer Werkstoffstange, eine Führungsbuchseneinheit, umfassend ein Außengehäuse und eine in diesem drehbar gelagerte Aufnahmehülse mit einer in dieser angeordneten und hinsichtlich ihrer radialen Führung der Werkstoffstange durch eine Einstellvorrichtung einstellbaren Führungsbuchse, und ein Maschinengestell, an welchem das Spindelgehäuse und die Führungsbuchseneinheit relativ zueinander in Richtung der Spindelachse bewegbar gehalten sind.

Derartige Langdrehmaschinen sind aus dem Stand der Technik, beispielsweise aus der DE 41 03 552 A, bekannt. Bei diesen besteht das Problem, dass bei hohen Drehzahlen hohe Fliehkräfte auftreten, die sich auf die Einstellung der Führungsbuchse auswirken, so dass sich die Einstellung der Führungsbuchse verändert.

Dies führt zu einer Beeinträchtigung der Oberflächenqualität und Maßhaltigkeit der bearbeiteten Werkstoffstange.

Der Erfindung liegt daher die Aufgabe zugrunde, eine Langdrehmaschine der gattungsgemäßen Art derart zu verbessern, dass negative Auswirkungen der bei hohen Drehzahlen auftretenden Fliehkräfte auf die Bearbeitungsqualität zumindest reduziert werden können.

Diese Aufgabe wird bei einer Langdrehmaschine der eingangs beschriebenen Art erfindungsgemäß dadurch gelöst, dass die Führungsbuchseneinheit mit einer Fliehkraftstelleinrichtung versehen ist, welche bei Fliehkrafteinwirkung auf die Führungsbuchse eine fliehkraftbedingte Verstellbewegung zumindest verringert.

Eine derartige Fliehkraftstelleinrichtung könnte beispielsweise so ausgebildet sein, dass sie eine fliehkraftbedingte Verstellbewegung der Führungsbuchse durch eine Blockiereinrichtung blockiert.

Besonders günstig ist es, wenn die Führungsbuchseneinheit mit einer Fliehkraftstelleinrichtung versehen ist, welche fliehkraftbedingten Verstellbewegungen der Führungsbuchse entgegenwirkt, das heißt, dass die Fliehkraftverstelleinrichtung eine Kraft erzeugt, welche der Kraft, die die fliehkraftbedingten Verstellbewegungen der Führungsbuchse auslöst, entgegenwirkt.

Besonders günstig ist es, wenn die Fliehkraftstelleinrichtung bei Fliehkrafteinwirkung auf die Führungsbuchse durch eine radial zur Werkstoffstange zustellende Einwirkung auf die Führungsbuchse den fliehkraftbedingten Verstellbewegungen der Führungsbuchse entgegenwirkt.

Ein derartiges Entgegenwirken der fliehkraftbedingten Verstellbewegungen der Führungsbuchse kann prinzipiell so erfolgen, dass die fliehkraftbedingten Verstellbewegungen stets reduziert werden.

Besonders günstig ist jedoch die Wirkung der Fliehkraftstelleinrichtung, wenn diese bei Fliehkrafteinwirkung bei zumindest einer Drehzahl den fliehkraftbedingten Verstellbewegungen der Führungsbuchse näherungsweise kompensierend entgegenwirkt, so dass sich beispielsweise die Fliehkraftverstelleinrichtung so dimensionieren lässt, dass sie zumindest bei einer vorteilhaften und beispielsweise für eine Vielzahl von Bearbeitungsvorgängen benötigten Drehzahl näherungsweise die fliehkraftbedingten Verstellbewegungen der Führungsbuchse kompensiert.

Noch besser ist es, wenn die Fliehkraftstelleinrichtung bei mehreren Drehzahlen den fliehkraftbedingten Verstellbewegungen der Führungsbuchse näherungsweise kompensierend entgegenwirkt.

Besonders günstig ist es, wenn die Fliehkraftstelleinrichtung in einem Drehzahlbereich den fliehkraftbedingten Verstellbewegungen der Führungsbuchse näherungsweise kompensierend entgegenwirkt.

Beispielsweise lässt sich hierzu ein eine Maximaldrehzahl umfassender Drehzahlbereich auswählen, in welchem die Fliehkräfte auch maximal sind, so dass zumindest in dem die Maximaldrehzahl umfassenden Bereich eine näherungsweise Kompensation der fliehkraftbedingten Verstellbewegungen der Führungsbuchse möglich ist.

Hinsichtlich der Ausbildung der Einstellvorrichtung wurden im Zusammenhang mit der bisherigen Erläuterung der einzelnen Ausführungsformen keine näheren Angaben gemacht. So wäre es beispielsweise denkbar, eine fest einstellbare Einstellvorrichtung einzusetzen.

Besonders vorteilhaft ist es jedoch, wenn die Einstellvorrichtung einen Einstellantrieb aufweist, mit welchem während des Betriebs der Langdrehmaschine eine Einstellung der Führungsbuchse möglich ist.

Diese Lösung hat den großen Vorteil, dass dadurch die Möglichkeit besteht, im Betrieb unterschiedliche Einstellungen der Führungsbuchse, beispielsweise je nach Bearbeitung, zu wählen.

Besonders vorteilhaft ist bei einer derartigen Ausführungsform, wenn die Fliehkraftstellvorrichtung und der Einstellantrieb zusammenwirkend ausgebildet sind.

Das heißt, dass die Fliehkraftstellvorrichtung beim Auftreten von Fliehkräften den Einstellantrieb zumindest unterstützt, im Fall einer näherungsweisen Kompensation der Fliehkrafteinwirkung auf die Führungsbuchse den Einstellantrieb so weit unterstützt, dass die Fliehkraftstellvorrichtung die fliehkraftbedingten Kräfte von der Führungsbuchse näherungsweise kompensiert, so dass diese sich nicht auf den Einstellantrieb auswirken.

Besonders günstig ist es, wenn die Fliehkraftstellvorrichtung eine Einstellung der Führungsbuchse durch den Einstellantrieb im Wesentlichen unbeeinflussend ausgebildet ist, das heißt, dass die von dem Einstellantrieb aufzubringenden Kräfte im Wesentlichen nicht durch die Fliehkräfte auf die Führungsbuchse beeinträchtigt werden, da die Fliehkraftstellvorrichtung diesen näherungsweise entgegenwirkt.

Hinsichtlich des Einstellantriebs besteht die Möglichkeit, eine eigens für diesen vorgesehene Steuerung anzusteuern. Besonders günstig ist es jedoch, wenn der Einstellantrieb durch eine Maschinensteuerung ansteuerbar ist, so dass der Einstellantrieb entsprechend der auf der Langdrehmaschine vorgesehenen Bearbeitungen mittels der Maschinensteuerung einstellbar ist.

Hinsichtlich der Ausbildung des Einstellantriebs wurden bislang keine näheren Angaben gemacht. Der Einstellantrieb könnte zum Beispiel mitrotierend angeordnet sein.

Eine vorteilhafte Lösung sieht jedoch vor, dass der Einstellantrieb nicht rotierend angeordnet ist.

Zweckmäßigerweise ist der Einstellantrieb in dem Außengehäuse angeordnet, um eine einfache und kompakte Bauweise der Führungsbuchseneinheit zu erreichen.

Die von dem Einstellantrieb erzeugten Bewegungen lassen sich günstig auf die Führungsbuchse übertragen, wenn der Einstellantrieb mit einem mit der Aufnahmehülse mitrotierenden Einstellelement für die Führungsbuchse gekoppelt ist.

Vorzugsweise ist dabei vorgesehen, dass die Führungsbuchse durch Bewegen des Einstellelements hinsichtlich ihrer radialen Führung der Werkstoffstange einstellbar ist.

Hierzu ist zweckmäßigerweise das Einstellelement in Richtung der Spindelachse relativ zur Aufnahmehülse bewegbar.

Um mit dem Einstellelement die Führungsbuchse hinsichtlich der radialen Führung der Werkstoffstange einstellen zu können, ist vorzugsweise vorgesehen, dass das Einstellelement direkt mit der Führungsbuchse zusammenwirkt.

In diesem Fall ist beispielsweise vorgesehen, dass die Führungsbuchse mit dem Einstellelement über mit dem Einstellelement und der Führungsbuchse verbundene erste Getriebeelemente zusammenwirkt.

Diese Getriebeelemente können beispielsweise durch Schwenkbewegungen arbeitende Getriebeelemente sein.

Besonders günstig ist es, wenn die ersten Getriebeelemente Elemente eines Keilgetriebes sind.

Ferner lässt sich die Einstellung der Führungsbuchse dann zweckmäßig und möglichst gleichmäßig durchführen, wenn die Führungsbuchse in Richtung der Spindelachse in der Aufnahmehülse bewegbar ist und über mit der Aufnahmehülse und der Führungsbuchse verbundene zweite Getriebeelemente einstellbar ist.

Zweckmäßigerweise sind dabei ebenfalls die zweiten Getriebeelemente Elemente eines Keilgetriebes.

Besonders vorteilhaft ist es, wenn die Führungsbuchse mittels der ersten und zweiten Getriebeelemente hinsichtlich der radialen Führung der Werkstoffstange einstellbar ist, wobei die ersten Getriebeelemente auf einen ersten Endbereich der Führungsbuchse wirken, während die zweiten Getriebeelemente auf einen dem Endbereich gegenüberliegenden zweiten Endbereich der Führungsbuchse wirken.

Hinsichtlich der Einwirkung der Fliehkraftstelleinrichtung auf die Führungsbuchse wurden bislang keine näheren Angaben gemacht. Prinzipiell könnte die Fliehkraftstelleinrichtung mit eigens für diese vorgesehenen Einstellelementen auf die Führungsbuchse einwirken.

Besonders günstig ist es jedoch, wenn die Fliehkraftstelleinrichtung auf das durch den Einstellantrieb bewegbare Einstellelement wirkt.

Ferner wurden hinsichtlich der Ausbildung der Fliehkraftstelleinrichtung ebenfalls keine näheren Angaben gemacht.

So sieht eine besonders günstige Lösung vor, dass die Fliehkraftstellung mindestens einen mit der Aufnahmehülse mitrotierend angeordneten und mit einer Komponente radial zur Spindelachse bewegbaren Fliehkraftstellkörper aufweist, der mit einem Fliehkraftstellelement zusammenwirkt.

Durch einen derartigen Fliehkraftstellkörper lässt sich in einfacher Weise eine Bewegung des Fliehkraftstellelements erreichen, um auf die Führungshülse einwirken zu können.

Eine konstruktiv besonders einfache Lösung sieht dabei vor, dass der mindestens eine Fliehkraftstellkörper und das Fliehkraftstellelement über dritte Getriebeelemente zusammenwirken, um dadurch die fliehkraftbedingte Bewegung des Fliehkraftstellkörpers in eine Bewegung des Fliehkraftstellelements umzusetzen.

Zweckmäßigerweise bilden dabei auch die dritten Getriebeelemente ein Keilgetriebe.

Im einfachsten Fall ist dabei vorgesehen, dass das Fliehkraftstellelement auf das Einstellelement wirkt, und somit in der Lage ist, über die gleichen Mechanismen wie der Einstellantrieb die Führungsbuchse hinsichtlich ihrer radialen Führung der Werkstoffstange einstellen zu können.

Im einfachsten Fall ist dabei das Fliehkraftstellelement fest mit dem Einstellelement verbunden.

Hinsichtlich der Anordnung des mindestens einen Fliehkraftstellkörpers wurden ebenfalls keine näheren Angaben gemacht.

So sieht eine besonders günstige Lösung vor, dass der mindestens eine Fliehkraftstellkörper in einer Ausnehmung eines mit der Aufnahmehülse verbundenen Lagerkörpers angeordnet ist, so dass der über den mit der Aufnahmehülse mitdrehenden Lagerkörper der Fliehkraftstellkörper mit der Aufnahmehülse mitrotiert.

Eine konstruktiv besonders kompakte Lösung sieht dabei vor, dass der Lagerkörper ein Verbindungselement zwischen der Aufnahmehülse und einem mit der Arbeitsspindel mitdrehend ausgebildeten Kopplungsrohr darstellt.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine teilweise geschnittene Seitenansicht einer erfindungsgemäßen Langdrehmaschine;
- Fig. 2: eine vergrößerte Darstellung einer Führungsbuchseneinheit der erfindungsgemäßen Langdrehmaschine;
- Fig. 3: einen Schnitt längs Linie 3-3 in Fig. 4 durch eine erste Ausführungsform einer erfindungsgemäßen Führungsbuchse;
- Fig. 4: eine Draufsicht auf die erste Ausführungsform der Führungsbuchse in Richtung des Pfeils A in Fig. 3;
- Fig. 5: eine Darstellung ähnlich Fig. 3 einer zweiten Ausführungsform einer erfindungsgemäßen Führungsbuchse;
- Fig. 6: eine Darstellung ähnlich Fig. 4 der zweiten Ausführungsform der erfindungsgemäßen Führungsbuchse;
- Fig. 7: eine Darstellung ähnlich Fig. 4 einer dritten Ausführungsform einer erfindungsgemäßen Führungsbuchse und
- Fig. 8: eine Darstellung ähnlich Fig. 4 einer vierten Ausführungsform einer erfindungsgemäßen Führungsbuchse.

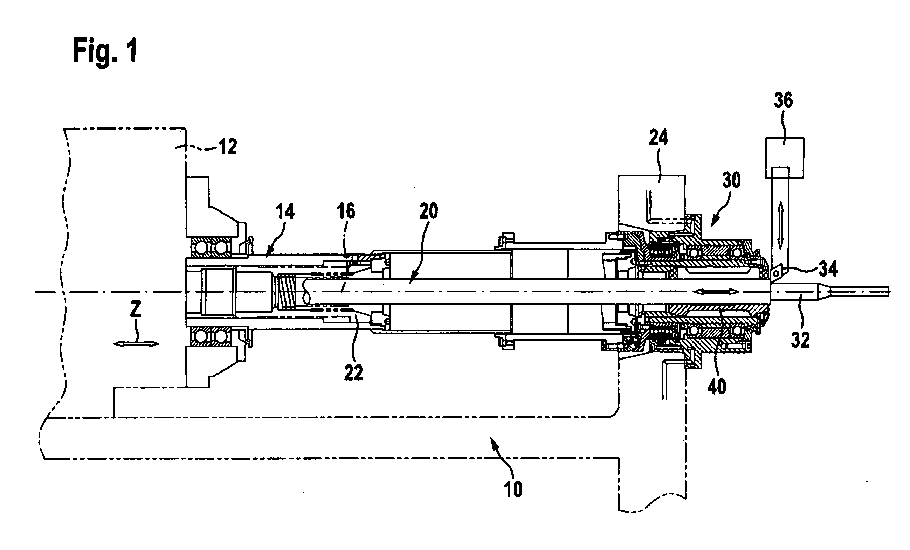

Ein in Fig. 1 dargestelltes Ausführungsbeispiel einer erfindungsgemäßen Langdrehmaschine umfasst ein Maschinengestell 10, welches ein Spindelgehäuse 12 trägt, in welchem eine Arbeitsspindel 14 um eine Spindelachse 16 drehbar gelagert ist.

In der Arbeitsspindel 14 ist eine als Ganzes mit 20 bezeichnete Werkstoffstange aufgenommen und durch eine Spannzange 22 spannbar, um die Werkstoffstange 20 einerseits um die Spindelachse 16 rotierend antreiben zu können und andererseits in Richtung der Spindelachse 16 dadurch verschieben zu können, dass das Spindelgehäuse 12 relativ zum Maschinengestell 10 in einer Z-Richtung verschiebbar geführt ist.

An dem Maschinengestell 10 ist außerdem an einem Träger 24 eine Führungsbuchseneinheit 30 gehalten, welche von der Werkstoffstange 20 ebenfalls durchsetzt ist und welche dazu dient, die Werkstoffstange 20 in Richtung der Spindelachse 16 im Abstand von der Arbeitsspindel 14 zusätzlich zu führen, um die Werkstoffstange 20 in einem auf einer der Arbeitsspindel 14 gegenüberliegenden Seite der Führungsbuchseneinheit 30 überstehenden Bereich 32 mittels eines Werkzeugs 34 bearbeiten zu können, wobei das Werkzeug 34 an einem relativ zum Maschinengestell 10 bewegbaren Werkzeugträger gehalten ist.

Bei dem dargestellten Ausführungsbeispiel erfolgt die Bearbeitung der Werkstoffstange 20 insbesondere nach dem Prinzip des Langdrehens mit einer relativ zum Maschinengestell 10 feststehend angeordneten Führungsbuchseneinheit 30, wobei das Werkzeug 34 nahe der Führungsbuchseneinheit 30 in dem Bereich 32 der Werkstoffstange bearbeitet, während eine Bewegung des Werkzeugs 34 und der Werkstoffstange 20 relativ zueinander in Z-Richtung dadurch erfolgt, dass die Werkstoffstange 20 durch Verschieben der Arbeitsspindel 14 mitsamt dem Spindelgehäuse 12 in Z-Richtung relativ zum Maschinengestell 10 bewegbar ist und somit die Werkstoffstange 20 zur Erzeugung der Relativbewegung zwischen dem Werkzeug 34 und der Werkstoffstange 20 durch die Führungsbuchseneinheit 30 in Richtung der Spindelachse 16 hindurch geschoben wird.

Zum Erzielen guter Ergebnisse der Bearbeitung der Werkstoffstange 20 im Bereich 32 ist es daher erforderlich, die Werkstoffstange 20 im Bereich der Führungsbuchseneinheit 30 relativ zur Spindelachse 16 möglichst exakt zu führen, jedoch dennoch eine Relativverschiebung der Werkstoffstange 20 zur Führungsbuchseneinheit 30 zuzulassen.

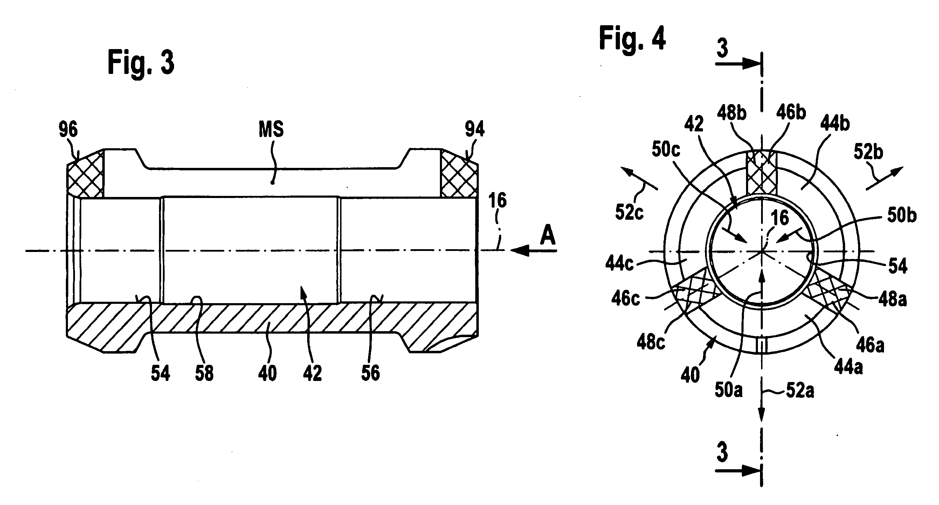

Aus diesem Grund ist in der Führungsbuchseneinheit 30, wie in Fig. 1 bis 4 dargestellt, eine Führungsbuchse 40 vorgesehen, die einen Führungskanal 42 aufweist, durch welchen die Werkstoffstange 20 hindurchführbar ist und welche mehrere, beispielsweise insgesamt drei, den Führungskanal 42 umgebende Führungsbuchsensegmente 44a, 44b und 44c aufweist, die in Umfangsrichtung zur Spindelachse 16 relativ zueinander mit Zwischenräumen 46a, 46b und 46c zueinander angeordnet sind, wobei in diesen Zwischenräumen jeweils endseitig der Führungsbuchsensegmente 44a, 44b und 44c kompressionselastische Elemente 48a, 48b und 48c angeordnet sind, die ausgehend von einer Ausgangsstellung bei einer Kompression derselben eine Bewegung der Führungsbuchsensegmente 44a, 44b und 44c relativ zueinander derart zulassen, dass eine Verkleinerung der Zwischenräume 46a, 46b und 46c erfolgt, und damit eine radiale Zustellung der Führungsbuchsensegmente 44a, 44b und 44c in einer radial zur Spindelachse 16 verlaufenden Zustellrichtung 50a, 50b und 50c, um die Werkstoffstange 20 möglichst exakt zentriert relativ zur Spindelachse 16 zu führen.

Es ist aber auch möglich, bei komprimierten Elementen 48 eine Ausdehnung der Elemente 48 in ihre Ausgangsstellung und somit unter Vergrößerung der Zwischenräume 46 die Führungsbuchsensegmente 44a, 44b und 44c von der Spindelachse 16 radial zu dieser in entgegengesetzt zu den Zustellrichtungen 50 verlaufenden Rückstellrichtungen 51a, 52b und 52c zu bewegen, um diese von der Werkstoffstange 20 in radialer Richtung weg zu bewegen und somit in einer nicht komprimierten Ausgangsstellung der Elemente 48 die Werkstoffstange 20 in der Führungsbuchse 40 mit Spiel zu führen.

Vorzugsweise sind die Führungsbuchsensegmente 44 so angeordnet, dass diese lediglich in endseitigen Bereichen Führungsflächen 54 und 56 aufweisen, und zwischen diesen Führungsflächen 54 und 56 einen zurückgesetzten Bereich 58 aufweisen, der nicht an der Werkstoffstange 20 anlegbar ist.

Die kompressionselastischen Elemente 48 sind vorzugsweise so dimensioniert, dass diese ohne externe Beaufschlagung der Führungsbuchse 40 die Führungsbuchsensegmente 44 relativ zueinander so anordnen, dass die Werkstoffstange 20 im Bereich der Führungsflächen 54 und 56 mit Spiel führbar ist, so dass beispielsweise beim Werkstoffstangenwechsel die Werkstoffstange 20 in die Führungsbuchse 40 einfach einführbar ist.

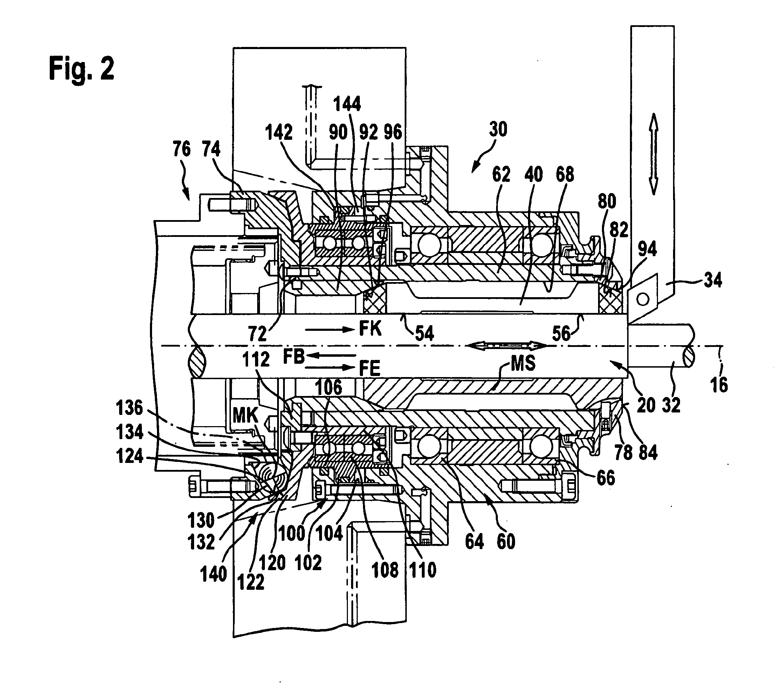

Wie insbesondere in Fig. 2 dargestellt, umfasst die Führungsbuchseneinheit 30 ein Außengehäuse 60, welches an dem Träger 24 des Maschinengestells 10 stationär gehalten ist und in welchem eine Aufnahmehülse 62 mittels zweier im Abstand von der Spindelachse 16 angeordneter Drehlager 64, 66 drehbar gelagert ist, wobei die Aufnahmehülse 62 einen Aufnahmekanal 68 aufweist, in welchem die Führungsbuchse 40 angeordnet ist.

Zur Mitnahme der Aufnahmehülse 62 entsprechend der Drehbewegung der Arbeitsspindel 14 ist die Aufnahmehülse 62 an ihrem der Arbeitsspindel 14 zugewandten Endbereich 72 mit einem Kupplungsring 74 verbunden, der über ein teleskopierbares Kopplungsrohr 76 drehfest mit der Arbeitsspindel 14 gekoppelt ist und somit dafür sorgt, dass die Aufnahmehülse 62 selbst drehfest mit der Arbeitsspindel 14 gekoppelt ist, wobei das teleskopierbare Kopplungsrohr 76 die Relativbewegung zwischen der Führungsbuchseneinheit 30 und der Arbeitsspindel 14 in Richtung der Spindelachse 16 zulässt.

Zur Positionierung der Führungsbuchse 40 in der Aufnahmehülse 62 ist die Aufnahmehülse 62 im Bereich ihres vorderen, dem zu bearbeitenden Bereichs 32 der Werkstoffstange 20 zugewandten Endbereichs mit einem im Bereich eines vorderen Deckels 78 der Aufnahmehülse 62 vorgesehenen Führungsring 80 versehen, welcher eine radial innenliegende Konusfläche 82 aufweist, die sich vom Aufnahmekanal 68 ausgehend in Richtung einer Frontfläche 84 des Führungsrings 80 verjüngt. Der Führungsring 80 ist fest mit der Aufnahmehülse 62 verbunden und rotiert mit dieser mit.

Auf einer dem Führungsring 80 gegenüberliegenden Seite ist in den Aufnahmekanal 68 der Aufnahmehülse 62 eine Einstellhülse 90 eingesetzt, welche ihrerseits eine der Führungsbuchse 40 zugewandt angeordnete und sich in Richtung der Führungsbuchse 40 erweiternde Konusfläche 92 aufweist.

Zwischen der Konusfläche 82 des Führungsrings 80 und der Konusfläche 92 der Einstellhülse 90 sitzt die Führungsbuchse 40, welche ebenfalls endseitig mit Konusflächen 94 und 96 versehen ist, wobei die Konusfläche 94 an der Konusfläche 82 anliegt, während die Konusfläche 96 an der Konusfläche 92 anliegt.

Über die jeweils zusammenwirkenden Konusflächen 82 und 94 sowie 92 und 96 erfolgt einerseits eine Zentrierung der Führungsbuchse 40 relativ zur Spindelachse 16 und andererseits eine Einstellung der Position der Führungsbuchsensegmente 44 relativ zu der Werkstoffstange 20, entweder unter Bewegung der Führungsbuchsensegmente 44 in den Zustellrichtungen 50a, 50b und 50c oder Bewegung der Führungsbuchsenelemente 44 in den Rückstellrichtungen 52a, 52b und 52c relativ zur Werkstoffstange 20, und zwar lediglich dadurch, dass die Einstellhülse 90 in Richtung parallel zur Spindelachse 16 relativ zum Führungsring 80 verschoben wird.

Eine Verschiebung der Einstellhülse 90 in Richtung des Führungsrings 80 bewirkt eine Bewegung der Führungsbuchsensegmente 44 in den Zustellrichtungen 50, während eine Bewegung der Einstellhülse 90 von dem Führungsring 80 weg eine Bewegung der Führungsbuchsensegmente 44 in den Rückstellrichtungen 52 bewirkt, so dass die Führungsflächen 54, 56 die Werkstoffstange 20 entweder mit Spiel führen können oder mit mehr oder weniger großer Kraft derart an der Werkstoffstange 20 anliegen können, dass die Werkstoffstange 20 noch relativ zu den Führungsflächen 54, 56 verschiebbar ist oder es besteht die Möglichkeit, die Werkstoffstange 20 zwischen den Führungsflächen 54, 56 derart fest einzuspannen, dass eine Relativbewegung zwischen der Werkstoffstange 20 und der Führungsbuchse 40 nicht mehr möglich ist und somit die Werkstoffstange 20 relativ zur Führungsbuchseneinheit 30 fixiert ist.

Zum Verstellen der Einstellhülse 90 in Richtung der Spindelachse 16 ist in dem Außengehäuse 60 ein Einstellantrieb 100 vorgesehen, welcher einen Ringkolben 102 umfasst, der in eine im Außengehäuse 60 vorgesehene Ringnut 104 eingreift, wobei der Ringkolben 102 auf einem die Ringnut 104 in jeder Stellung des Ringkolbens 102 verschließenden Abdeckring 106 sitzt.

Der Abdeckring 106 ist über Drehlager 108 mit einem gleitend auf der Aufnahmehülse 62 angeordneten Einstellring 110 verbunden, wobei der Einstellring 110 und der Abdeckring 106 relativ zueinander in Richtung der Spindelachse 16 unverschieblich sind, jedoch der Einstellring 110 gegenüber dem Abdeckring 106 drehbar ist, so dass der Einstellring 110 mit der Aufnahmehülse 62 mitrotieren kann.

Der Einstellring 110 ist seinerseits mit der Einstellhülse 90 über einen Mitnehmer 112 starr gekoppelt, so dass die Einstellhülse 90 jeder Bewegung des Einstellrings 110 in Richtung der Spindelachse und somit jeder Bewegung des Ringkolbens 102 in Richtung der Spindelachse folgt, wobei allerdings der Ringkolben 102 im Außengehäuse 60 nicht mitrotierend angeordnet ist.

Mit dem Einstellring 110 ist ferner ein Fliehkraftstellelement 120 gekoppelt, welches mit einem Flanschsegment 122 mehrere Fliehkraftstellkörper 130 auf ihrer der Spindelachse 16 abgewandten Außenseite übergreift, wobei die Fliehkraftstellkörper 130 beispielsweise als Kugeln ausgebildet sind und mit Berührungsflächen 132 an einer Konusfläche 124 des Flanschsegments 122 anliegen.

Die Fliehkraftstellkörper 130 sind vorzugsweise in Aufnahmen 134 des Kupplungsrings 74 geführt, wobei die Aufnahmen 134 mit einer Mittelachse 136 so ausgerichtet sind, dass die Mittelachse 136 quer, vorzugsweise ungefähr senkrecht zur Konusfläche 124 verläuft.

Wenn die Aufnahmehülse 62 zusammen mit dem Kupplungsring 74 um die Spindelachse 16 rotiert, wirken somit auf die ebenfalls mitrotierenden Fliehkraftstellkörper 130 Fliehkräfte, welche aufgrund des Anliegens der Berührungsfläche 132 der Fliehkraftstellkörper 130 an der Konusfläche 124 zu einer Kraft FK auf das Fliehkraftstellelement 120 führt, welche das Fliehkraftstellelement 120 und somit auch die mit diesem verbundene Einstellhülse 90 in Richtung des Führungsrings 80 beaufschlagt, das heißt, dass die Berührungsfläche 132 und die Konusfläche 124 zusammen als Keilgetriebe wirken, welche die auf die Fliehkraftstellkörper 130 wirkende Fliehkraft in die parallel zur Spindelachse 16 gerichtete Kraft FK auf die Einstellhülse 90 umsetzen.

Beispielsweise ist dabei eine Vielzahl von Fliehkraftstellkörpern 130 in Aufnahmen 134 in dem Kupplungsring 74 angeordnet, vorzugsweise in im Wesentlichen gleichen Winkelabständen um die Spindelachse 16.

Die durch die Summe aller Fliehkraftstellkörper 130 auf die Einstellhülse 90 wirkende Kraft FK wirkt eine Kraft FB entgegen, die dadurch entsteht, dass auch auf die Führungsbuchse 40, und zwar auf die einzelnen Führungsbuchsensegmente 44 die Fliehkraft wirkt, die die Tendenz hat, die Führungsbuchsensegmente 44 in Rückstellrichtung 52 von der Werkstoffstange 20 weg radial zur Spindelachse 16 zu bewegen.

Dabei wirken die Konusflächen 94 und 96 der Führungsbuchse 40 zusammen mit den Konusflächen 82 und 92 ebenfalls wiederum als Keilgetriebe, die die in der Rückstellrichtung 52 wirkenden Fliehkräfte auf die Führungsbuchsensegmente 44 in die Kraft FB auf die Einstellhülse 90 umsetzen.

Sind nun die Konuswinkel der Konusflächen 94 und 96 sowie 82 und 92 identisch, so bewegen sich die Führungsbuchsensegmente 44 stets im Wesentlichen parallel zur Spindelachse 16 ausgerichtet entweder in der Zustellrichtung 50 auf die Werkstoffstange 20 zu oder in der Rückstellrichtung 52 von der Werkstoffstange 20 weg und die Kraft FB ist bei allen Drehzahlen der Aufnahmehülse 62 im Wesentlichen abhängig von einem radialen Abstand eines Masseschwerpunktes MS der einzelnen Führungsbuchsensegmente 44 von der Spindelachse 16.

Weist nun vorzugsweise die Konusfläche 124 denselben Konuswinkel auf wie die Konusflächen 94 und 96 sowie 82 und 92, so lassen sich die Massenschwerpunkte MK der Fliehkraftstellkörper 130 derart wählen, dass bei allen Drehzahlen die Kraft FK im Wesentlichen der Kraft FB entspricht, so dass sich - abgesehen von Reibung - die Kräfte FK und FB aufheben und somit im Wesentlichen eine Kompensation der durch die auf die Führungsbuchsensegmente 44 wirkenden Fliehkraft erfolgt.

Dies hat den Effekt, dass der Einstellantrieb 100 unabhängig von der auf die Führungsbuchse 40 und insbesondere die Führungsbuchsensegmente 44 wirkenden Fliehkraft betrieben werden kann und sich beiderseits des Ringkolbens 102 bildende Zylinderkammern 142 und 144 hydraulisch oder pneumatisch derart druckbeaufschlagt werden können, dass der Einstellantrieb 100 mit der gewünschten Kraft FE auf die Einstellhülse 90 wirkt, um die Führungsbuchsensegmente 44 in der gewünschten Art und Weise zu bewegen.

Beispielsweise ist somit die Einstellhülse 90 so bewegbar, dass die Führungsbuchsensegmente 44 die Möglichkeit haben, sich in der Rückstellrichtung 52, insbesondere unter Wirkung der kompressionselastischen Elemente 48 zu bewegen um die Führungsflächen 54, 56 mit Spiel relativ zur Werkstoffstange 20 zu positionieren, um beispielsweise die Werkstoffstange 20 einzuführen oder auszuwechseln.

Es besteht aber auch die Möglichkeit, derart auf die Einstellhülse 90 mit der Kraft FE einzuwirken, dass sich die Führungsbuchsensegmente 44 in Zustellrichtung 50 auf die Werkstoffstange 20 zu bewegen, und mit den Führungsflächen 54, 56 an der Werkstoffstange 20 anliegen, wobei die radiale Kraft, mit der die Führungsflächen 54, 56 auf die Werkstoffstange 20 wirken, einstellbar ist, um je nach Bearbeitung die Werkstoffstange 20 koaxial zur Spindelachse 16 zu führen.

Es besteht aber auch die Möglichkeit, die Führungsflächen 54 und 56 mit derart großer Kraft an der Werkstoffstange 20 anzulegen, dass diese durch die Führungsbuchse 40 festgespannt in der Führungsbuchseneinheit 30 gehalten ist, um beispielsweise im nicht rotierenden Betrieb Fräsarbeiten durchzuführen, oder das Werkstück abstechen zu können.

Der durch das Fliehkraftstellelement 120 und die Fliehkraftstellkörper 130 gebildete Fliehkraftstellantrieb 140 hat zur Folge, dass die von dem Einstellantrieb 100 erzeugte Kraft FE im Wesentlichen von den Fliehkräften auf die Führungsbuchsensegmente 44 nicht beeinflusst wird und somit kann eine Steuerung des Einstellantriebs 100 im Wesentlichen unabhängig von der Drehzahl der Arbeitsspindel 14 und somit auch der Drehzahl der Aufnahmehülse 62 erfolgen.

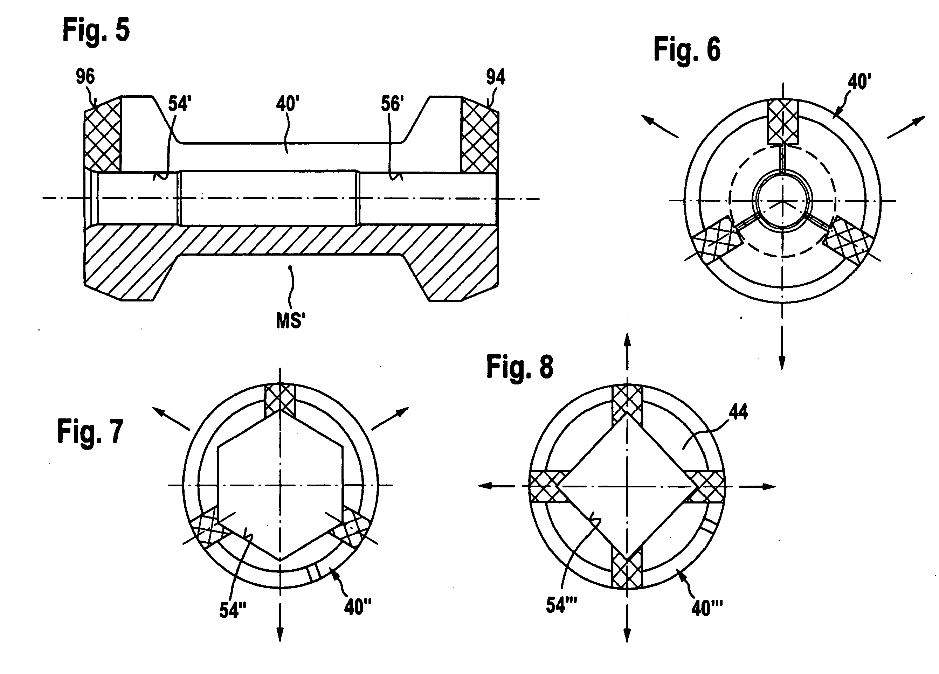

Da bei der erfindungsgemäßen Langdrehmaschine jedoch Werkstoffstangen 20 unterschiedlichen Durchmessers bearbeitet werden sollen, sind für jeweils unterschiedliche Durchmesser unterschiedliche Führungsbuchsen 40 vorgesehen. Beispielsweise ist, wie in Fig. 5 und 6 dargestellt, für einen kleineren Werkstoffstangendurchmesser eine Führungsbuchse 40' vorgesehen, die vom Prinzip her identisch aufgebaut ist wie die Führungsbuchse 40, allerdings Führungsflächen 54' und 56' mit einem geringeren Durchmesser aufweist.

Andererseits sind die Konusflächen 94 und 96 identisch mit denen der Führungsbuchse 40 ausgebildet, so dass die Führungsbuchse 40' ohne Änderung der Aufnahmehülse 62 und ohne Veränderung der Konusflächen 82 und 92 in der erfindungsgemäßen Führungsbuchseneinheit 30 eingesetzt werden kann.

Um zu erreichen, dass auch bei einer derart geometrisch anders ausgebildeten Führungsbuchse 40' die Kompensation der auf diese wirkenden Fliehkraft in gleicher Weise möglich ist wie bei der Führungsbuchse 40, ist vorzugsweise vorgesehen, dass der radiale Abstand des Massenschwerpunktes MS' bei der Führungsbuchse 40' im Wesentlichen dem radialen Abstand des Massenschwerpunktes MS bei der Führungsbuchse 40 entspricht, so dass die durch die Fliehkraft erzeugte Kraft FB gleich groß ist wie bei der Führungsbuchse 40. Eine derartige Anpassung des Massenschwerpunktes MS' lässt sich insbesondere durch Variation der geometrischen Form der Führungsbuchse 40' zwischen den Konusflächen 94 und 96 erreichen.

Die erfindungsgemäß einzusetzende Führungsbuchse 40 lässt sich jedoch nicht nur für im Querschnitt runde Werkstoffstangen einsetzen, sondern es besteht die Möglichkeit, wie in Fig. 7 dargestellt, auch Werkstoffstangen mit einem Sechskantquerschnitt einzusetzen, wobei die Führungsflächen 54 und 56 entsprechend der Querschnittsform der Werkstoffstange 20 anzupassen sind, wie beispielsweise die Führungsfläche 54" der Führungsbuchse 40" zeigt.

Soll im Gegensatz dazu, wie in Fig. 8 dargestellt, die Führungsbuchse 40"' für eine Werkstoffstange 20 mit einem Vierkant als Querschnitt eingesetzt werden, so sind ebenfalls die Führungsflächen 54 und 56 anzupassen, wie die Führungsfläche 54"' in Fig. 8 zeigt, wobei in diesem Fall die Zahl der Führungsbuchsensegmente 44 ebenfalls anzupassen ist, so dass beispielsweise bei einer Werkstoffstange 20 mit einem Vierkant als Querschnitt insgesamt vier Führungsbuchsensegmente 44 eingesetzt werden, die relativ zueinander bewegbar sind.

## Patentansprüche

1. Langdrehmaschine umfassend ein Spindelgehäuse (12) mit einer in diesem um eine Spindelachse (16) drehbaren Arbeitsspindel (14) zur Aufnahme einer Werkstoffstange (20), eine Führungsbuchseneinheit (30), umfassend ein Außengehäuse (60) und eine in diesem drehbar gelagerte Aufnahmehülse (62) mit einer in dieser angeordneten und hinsichtlich ihrer radialen Führung der Werkstoffstange (20) durch eine Einstellvorrichtung (100) einstellbaren Führungsbuchse (40), und ein Maschinengestell (10), an welchem das Spindelgehäuse (12) und die Führungsbuchseneinheit (30) relativ zueinander in Richtung (Z) der Spindelachse (16) bewegbar gehalten sind,
**dadurch gekennzeichnet, dass** die Führungsbuchseneinheit (30) mit einer Fliehkraftstelleinrichtung (140) versehen ist, welche bei Fliehkrafteinwirkung auf die Führungsbuchse (40) eine fliehkraftbedingte Verstellbewegung derselben zumindest verringert.

2. Langdrehmaschine nach Anspruch 1, **dadurch gekennzeichnet, dass** die Führungsbuchseneinheit (30) mit einer Fliehkraftstelleinrichtung (140) versehen ist, welche fliehkraftbedingten Verstellbewegungen der Führungsbuchse (40) entgegenwirkt.

3. Langdrehmaschine nach Anspruch 1 oder 2, **dadurch gekennzeichnet, dass** die Fliehkraftstelleinrichtung (140) bei Fliehkrafteinwirkung auf die Führungsbuchse (40) durch eine radial zur Werkstoffstange (20) zustellende Einwirkung (50) auf die Führungsbuchse (40) den fliehkraftbedingten Verstellbewegungen der Führungsbuchse (40) entgegenwirkt.

4. Langdrehmaschine nach einem der voranstehenden Ansprüche, **dadurch gekennzeichnet, dass** die Fliehkraftstelleinrichtung (140) bei Fliehkrafteinwirkung bei zumindest einer Drehzahl den fliehkraftbedingten Verstellbewegungen der Führungsbuchse (40) näherungsweise kompensierend entgegenwirkt.

5. Langdrehmaschine nach einem der voranstehenden Ansprüche, **dadurch gekennzeichnet, dass** die Fliehkraftstelleinrichtung (140) und ein Einstellantrieb (100) der Einstellvorrichtung zusammenwirkend ausgebildet sind.

6. Langdrehmaschine nach Anspruch 5, **dadurch gekennzeichnet, dass** die Fliehkraftstelleinrichtung (140) eine Einstellung der Führungsbuchse (40) durch den Einstellantrieb (100) im Wesentlichen unbeeinflussend ausgebildet ist.

7. Langdrehmaschine nach Anspruch 5 oder 6, **dadurch gekennzeichnet, dass** der Einstellantrieb (100) nicht rotierend angeordnet ist.

8. Langdrehmaschine nach einem der Ansprüche 5 bis 7, **dadurch gekennzeichnet, dass** der Einstellantrieb (100) mit einem mit der Aufnahmehülse (62) mitrotierenden Einstellelement (90) für die Führungsbuchse (40) gekoppelt ist.

9. Langdrehmaschine nach Anspruch 8, **dadurch gekennzeichnet, dass** das Einstellelement (90) in Richtung der Spindelachse (16) relativ zur Aufnahmehülse (40) bewegbar ist.

10. Langdrehmaschine nach einem der voranstehenden Ansprüche, **dadurch gekennzeichnet, dass** die Führungsbuchse (40) in Richtung der Spindelachse (16) in der Aufnahmehülse (62) bewegbar ist und über mit der Aufnahmehülse (62) und der Führungsbuchse (40) verbundene zweite Getriebeelemente (82, 94) einstellbar ist.

11. Langdrehmaschine nach einem der Ansprüche 8 bis 10, **dadurch gekennzeichnet, dass** die Fliehkraftstelleinrichtung (140) auf das durch den Einstellantrieb (100) bewegbare Einstellelement (90) wirkt.

12. Langdrehmaschine nach einem der voranstehenden Ansprüche, **dadurch gekennzeichnet, dass** die Fliehkrafteinstelleinrichtung (140) mindestens einen mit der Aufnahmehülse (62) mitrotierend angeordneten und mit einer Komponente radial zur Spindelachse (16) bewegbaren Fliehkraftstellkörper (130) aufweist, der mit einem Fliehkraftstellelement (120) zusammenwirkt.

13. Langdrehmaschine nach Anspruch 12, **dadurch gekennzeichnet, dass** der Fliehkraftstellkörper (130) und das Fliehkraftstellelement (120) über dritte Getriebeelemente (132, 124) zusammenwirken.

14. Langdrehmaschine nach einem der Ansprüche 8 bis 13, **dadurch gekennzeichnet, dass** der mindestens eine Fliehkraftstellkörper (130) in einer Aufnahme (134) eines mit der Aufnahmehülse (62) verbundenen Lagerkörpers (74) angeordnet ist.

15. Langdrehmaschine nach Anspruch 14, **dadurch gekennzeichnet, dass** der Lagerkörper (74) ein Verbindungselement zwischen der Aufnahmehülse (62) und einem mit der Arbeitsspindel (14) mitdrehend ausgebildeten Kopplungsrohr (76) darstellt.

## Claims

1. Turning lathe comprising a spindle housing (12) with a work spindle (14), which is rotatable therein around a spindle axis (16) to receive a rod (20) of material, a guide bush unit (30), comprising an external housing (60) and a receiving sleeve (62) rotatably mounted therein with a guide bush (40), which is arranged in said receiving sleeve and is adjustable with respect to its radial guidance of the rod (20) of material by means of an adjusting device (100), and a machine frame (10), on which the spindle housing (12) and the guide bush unit (30) are held to be movable relative to one another in the direction (Z) of the spindle axis (16),
**characterised in that** the guide bush unit (30) is provided with a centrifugal force adjusting means (140), which upon action of centrifugal force on the guide bush (40) at least reduces a centrifugal force-related adjusting movement thereof.

2. Turning lathe according to claim 1, **characterised in that** the guide bush unit (30) is provided with a centrifugal force adjusting means (140), which counteracts centrifugal force-related adjusting movements of the guide bush (40).

3. Turning lathe according to claim 1 or 2, **characterised in that** the centrifugal force adjusting means (140) counteracts the centrifugal force-related adjusting movements of the guide bush (40) upon action of centrifugal force on the guide bush (40) by an action (50) radial to the rod (20) of material onto the guide bush (40).

4. Turning lathe according to one of the preceding claims, **characterised in that** upon action of centrifugal force at at least one rotational speed the centrifugal force adjusting means (140) counteracts the centrifugal force-related adjusting movements of the guide bush (40) in an approximately compensating manner.

5. Turning lathe according to one of the preceding claims, **characterised in that** the centrifugal force adjusting means (140) and an adjusting drive (100) of the adjusting device are configured to cooperate with one another.

6. Turning lathe according to claim 5, **characterised in that** the centrifugal force adjusting means (140) is configured to have substantially no influence on an adjustment of the guide bush (40) by the adjusting drive (100).

7. Turning lathe according to claim 5 or 6, **characterised in that** the adjusting drive (100) is arranged to be non-rotational.

8. Turning lathe according to one of claims 5 to 7, **characterised in that** the adjusting drive (100) is coupled to an adjusting element (90) for the guide bush (40) that rotates together with the receiving sleeve (62).

9. Turning lathe according to claim 8, **characterised in that** the adjusting element (90) is movable relative to the receiving sleeve (40) in the direction of the spindle axis (16).

10. Turning lathe according to one of the preceding claims, **characterised in that** the guide bush (40) is movable in the direction of the spindle axis (16) in the receiving sleeve (62) and is adjustable by means of second gear elements (82, 94) connected to the receiving sleeve (62) and the guide bush (40).

11. Turning lathe according to one of claims 8 to 10, **characterised in that** the centrifugal force adjusting means (140) acts on the adjusting element (90) movable by means of the adjusting drive (100).

12. Turning lathe according to one of the preceding claims, **characterised in that** the centrifugal force adjusting means (140) has at least one centrifugal force adjusting body (130), which is arranged to rotate together with the receiving sleeve (62) and is movable radially to the spindle axis (16) with one component, and which cooperates with a centrifugal force adjusting element (120).

13. Turning lathe according to claim 12, **characterised in that** the centrifugal force adjusting body (130) and the centrifugal force adjusting element (120) cooperate by means of third gear elements (132, 124).

14. Turning lathe according to one of claims 8 to 13, **characterised in that** the at least one centrifugal force adjusting body (130) is arranged in a receiving means (134) of a bearing body (74) connected to the receiving sleeve (62).

15. Turning lathe according to claim 14, **characterised in that** the bearing body (74) constitutes a connecting element between the receiving sleeve (62) and a coupling tube (76) configured to turn together with the work spindle (14).

## Revendications

1. Tour à poupée mobile comprenant un boîtier de broche (12) équipé d'une broche d'usinage (14) pouvant tourner autour d'un axe de broche (16), destiné à accueillir une barre de matière (20), un canon de guidage (30), comprenant un boîtier externe (60) et un manchon de réception (62), positionné dans celui-ci de façon à pouvoir tourner et équipé d'un canon de guidage (40) disposé dans celui-ci et pouvant être réglé, du point de vue de son guidage radial de la barre de matière (20), grâce à un dispositif de réglage (100), ainsi qu'un bâti (10) sur lequel sont maintenus, de façon mobile l'un par rapport à l'autre dans le sens (Z) de l'axe de broche (16), le boîtier de broche (12) et le canon de guidage (30),
**caractérisé en ce que**
le canon de guidage (30) est doté d'un dispositif de réglage de la force centrifuge (140) qui diminue, au moins, un mouvement de déplacement du canon de guidage (40), dû à la force centrifuge, en cas d'action de celle-ci sur le canon.

2. Tour à poupée mobile selon la revendication 1,
**caractérisé en ce que**
le canon de guidage (30) est doté d'un dispositif de réglage de la force centrifuge (140) qui réagit à des mouvements de déplacement du canon de guidage (40) dus à la force centrifuge.

3. Tour à poupée mobile selon la revendication 1 ou la revendication 2,
**caractérisé en ce que**
le dispositif de réglage de la force centrifuge (140) réagit aux mouvements de déplacement du canon de guidage (40) dus à la force centrifuge en cas d'action de celle-ci sur le canon de guidage (40) grâce à une action (50), à fournir radialement à la barre de matière (20), sur le canon de guidage (40).

4. Tour à poupée mobile selon l'une quelconque des revendications précédentes,
**caractérisé en ce que** le dispositif de réglage de la force centrifuge (140) réagit, en cas d'action de la force centrifuge, pratiquement en compensation, aux mouvements de déplacement du canon de guidage (40), dus à la force centrifuge, pour au moins une vitesse de rotation.

5. Tour à poupée mobile selon l'une quelconque des revendications précédentes,
**caractérisé en ce que**
le dispositif de réglage de la force centrifuge (140) et l'entraînement de réglage (100) du dispositif de réglage coopèrent entre eux.

6. Tour à poupée mobile selon la revendication 5,
**caractérisé en ce que**
le dispositif de réglage de la force centrifuge (140) est configuré essentiellement sans influence sur un réglage du canon de guidage (40) par l'entraînement de réglage (100).

7. Tour à poupée mobile selon la revendication 5 ou la revendication 6,
**caractérisé en ce que**
l'entraînement de réglage (100) ne tourne pas.

8. Tour à poupée mobile selon l'une quelconque des revendications 5 à 7,
**caractérisé en ce que**
l'entraînement de réglage (100) est couplé à un élément de réglage (90), du canon de guidage (40), tournant en même temps avec le manchon de réception (62)

9. Tour à poupée mobile selon la revendication 8,
**caractérisé en ce que**
l'élément de réglage (90) peut être déplacé dans le sens de l'axe de broche (16) par rapport au manchon de réception (40).

10. Tour à poupée mobile selon l'une quelconque des revendications précédentes,
**caractérisé en ce que**
le canon de guidage (40) peut être déplacé vers l'axe de broche (16) dans le manchon de réception (62) et peut être réglé par des deuxièmes éléments d'engrenage (82, 94) reliés au manchon de réception (62) et au canon de guidage (40).

11. Tour à poupée mobile selon l'une quelconque des revendications 8 à 10,
**caractérisé en ce que**
le dispositif de réglage de la force centrifuge (140) agit sur l'élément de réglage (90) pouvant être déplacé par l'entraînement de réglage (100).

12. Tour à poupée mobile selon l'une quelconque des revendications précédentes,
**caractérisé en ce que**
le dispositif de réglage de la force centrifuge (140) présente au moins un corps de réglage de la force centrifuge (130) disposé de façon à tourner avec le manchon de réception (62) et pouvant être déplacé avec un composant radialement à l'axe de broche (16) et qui coopère avec l'élément de réglage de la force centrifuge (120).

13. Tour à poupée mobile selon la revendication 12,
**caractérisé en ce que** le corps de réglage de la force centrifuge (130) et l'élément de réglage de la force centrifuge (120) coopèrent par des troisièmes éléments d'engrenage (132, 124).

14. Tour à poupée mobile selon l'une quelconque des revendications 8 à 13,
**caractérisé en ce qu**'
au moins un des corps de réglage de la force centrifuge (130) est disposé dans un logement (134) d'un corps de palier (74) relié au manchon de réception (62).

15. Tour à poupée mobile selon la revendication 14,
**caractérisé en ce que**
le corps de palier (74) constitue un élément de liaison entre le manchon de réception (62) et un tube de couplage (76) configuré pour tourner avec la broche d'usinage (14).
